# EUROPEAN PATENT APPLICATION

(11) **EP 4 717 749 A1**
(43) Date of publication of application: **01.04.2026**
(21) Application number: 24306575.2
(22) Date of filing: 27.09.2024
(51) Int. Cl.: C10G 1/00, C10G 1/10, C10G 29/20, C10G 45/00, C10G 69/12

(54) **PRODUCTION OF RENEWABLE FUELS**

(71) Applicant: Technip Energies France, 92741 Nanterre Cedex (FR)
(72) Inventor: Hwang, Shyh-Yuan Henry, 92741 Nanterre Cedex (FR)
(74) Representative: Edson, Russell Gregory

(57) **Abstract**

Disclosed are methods and systems for producing renewable fuels by upgrading a renewable hydrocarbon stream (e.g., a stream comprising C6-C12 aromatic hydrocarbons). The products can be used as renewable jet fuel and renewable diesel fuels, for example.

## Description

### Technical Field

The disclosure relates generally to methods and systems for producing renewable fuels (e.g., renewable jet fuel and renewable diesel fuel) by upgrading a renewable hydrocarbon stream. For example, the disclosure can involve upgrading a stream comprising C6-C12 aromatic hydrocarbons. More specifically, but not by way of limitation, this disclosure relates to methods to reduce the carbon footprint of fuels and to improve process efficiencies for fuel generation.

### Background

The production of renewable fuels is currently of great interest to combat climate change by reducing the release of greenhouse gases such as carbon dioxide and methane. For example, fuel formulation with the aim of emission reduction is one of the promising approaches in combustion engine transformation to achieve the targets of stringent emission regulations. A suitable cleaner fuel for diesel engines is desirable, considering the large number of diesel power vehicles throughout the world and higher diesel consumption. Moreover, diesel fuel consumption is higher compared to gasoline in most developed as well as developing countries. There are numerous studies available with biodiesel as a feedstock for diesel-operated engines with or without modifications. These biodiesels have effectively reduced the particulate matter emissions due to their inherent properties of higher oxygen content. However, they promote the formation of NOₓ due to higher combustion zone temperature. The lower heating value of these fuels leads to increased fuel consumption. Lowering the aromatic content from the fuel is one possible way to reduce the harmful exhaust emissions from these diesel engines.

With respect to jet fuel, in addition to CO₂ pollution, aviation's contribution to global warming goes well beyond that caused by carbon dioxide emissions alone. One of the main non-COz impacts is the net warming effect from the formation of contrails and contrail cirrus caused when aircraft engines emit particulates (soot) at altitude in ice-supersaturated regions. The main culprit is the aromatic content of jet fuel, and fuels with a higher concentration of aromatics and especially naphthalene, a bicyclic aromatic compound, cause higher particulate emissions because aromatics burn slower than other hydrocarbons.

### Summary

One or more embodiments of the disclosure relate to methods for producing renewable fuels, comprising: (1) alkylating a renewable hydrocarbon stream comprising C6-C12 aromatic compounds in an alkylation zone with alkylating agents to produce an alkylated renewable hydrocarbon stream comprising C8-C24 aromatic hydrocarbons, (2) hydrogenating at least part of the alkylated renewable hydrocarbon stream obtained in (1) in a hydrogenation zone with hydrogen to saturate at least a portion of the C8-C24 aromatic hydrocarbons in the alkylated renewable hydrocarbon stream and produce a hydrogenated renewable hydrocarbon stream, and (3) recovering a renewable fuels stream from at least part of the hydrogenated renewable hydrocarbon stream obtained in (2).

One or more embodiments relate to the methods of the preceding paragraph, wherein recovering a renewable fuels stream from at least part of the hydrogenated renewable hydrocarbon stream comprises separating the renewable fuels stream from by-products in at least one separation unit.

One or more embodiments relate to the methods of the preceding paragraphs, wherein the at least one separation unit comprises a distillation column.

One or more embodiments relate to the methods of the preceding paragraphs, wherein the hydrogenation zone comprises a hydrogenation reactor comprising a hydrogenation catalyst.

One or more embodiments relate to the methods of the preceding paragraphs, wherein the hydrogenation catalyst comprises one or more Group VIIIB metals.

One or more embodiments relate to the methods of the preceding paragraphs, wherein the hydrogenation catalyst comprises nickel, cobalt, platinum, ruthenium, rhodium, palladium, iridium, or any combination thereof.

One or more embodiments relate to the methods of the preceding paragraphs, wherein the hydrogenation step saturates at least 30 wt.% of the C8-C24 aromatic hydrocarbons in the alkylated renewable hydrocarbon stream.

One or more embodiments relate to the methods of the preceding paragraphs, wherein at least a portion of the alkylating agents are added to the renewable hydrocarbon stream.

One or more embodiments relate to the methods of the preceding paragraphs, wherein the alkylating agents all come from the renewable hydrocarbon stream.

One or more embodiments relate to the methods of the preceding paragraphs, wherein the alkylating agents comprise C2-C12 olefins or C1-C12 oxygenates.

One or more embodiments relate to the methods of the preceding paragraphs, wherein the alkylation is carried out in the liquid phase.

One or more embodiments relate to the methods of the preceding paragraphs, wherein the alkylation is carried out at least partially in the vapor phase.

One or more embodiments relate to the methods of the preceding paragraphs, wherein the renewable fuels stream is a sustainable aviation fuel.

One or more embodiments relate to the methods of the preceding paragraphs, wherein the renewable hydrocarbons stream comes from biomass, solid waste, waste plastic, waste gas, syn gas, or any combinations thereof.

One or more embodiments of the present disclosure relate to methods for producing renewable fuels, comprising: (1) at least one alkylation reactor for alkylating a renewable hydrocarbon stream comprising C6-C12 aromatic compounds with alkylating agents to produce an alkylated renewable hydrocarbon stream comprising C8-C24 aromatic hydrocarbons, (2) at least one hydrogenation reactor for hydrogenating at least part of the alkylated renewable hydrocarbon stream obtained in (1) with hydrogen to saturate at least a portion of the C8-C24 aromatic hydrocarbons in the alkylated renewable hydrocarbon stream and produce a hydrogenated renewable hydrocarbon stream, and (3) at least one separation unit for recovering a renewable fuels stream from the hydrogenated renewable hydrocarbon stream obtained in (2).

One or more embodiments relate to the methods of the preceding paragraph, wherein the at least one separation unit comprises a distillation column.

One or more embodiments relate to the methods of the preceding paragraphs, wherein the at least one hydrogenation reactor comprises a hydrogenation catalyst.

One or more embodiments relate to the methods of the preceding paragraphs, wherein the at least one alkylation reactor is configured to operate adiabatically.

One or more embodiments relate to the methods of the preceding paragraphs, wherein the at least one alkylation reactor is configured to operate isothermally.

One or more embodiments relate to the methods of the preceding paragraphs, wherein the at least one alkylation reactor comprises a heterogenous alkylation catalyst.

One or more embodiments relate to the methods of the preceding paragraphs, wherein the separation unit separates a by-products stream from the hydrogenated renewable hydrocarbon stream.

### Brief Description of the Drawings

FIG. 1 illustrates a process flow diagram for some embodiments involving a process for producing renewable fuels by upgrading a renewable hydrocarbon stream comprising C6-C12 aromatic compounds.
FIG. 2 illustrates a process flow diagram for some embodiments involving a process for producing renewable fuels by upgrading a renewable hydrocarbon stream comprising C6-C12 aromatic compounds.
FIG. 3 illustrates a process flow diagram for some embodiments involving a process for producing renewable fuels by upgrading a renewable hydrocarbon stream comprising C6-C12 aromatic compounds.

### Detailed Description

In some embodiments, the disclosure relates to methods of producing renewable fuels such as jet and diesel fuels, for example, by upgrading a hydrocarbon stream comprising C6-C12 aromatic hydrocarbons. In some embodiments, the hydrocarbon stream can be a renewable hydrocarbon stream. In some embodiments, the processes disclosed can be used to produce sustainable aviation fuel (SAF).

### Hydrocarbon Stream

In some embodiments, the hydrocarbon stream (e.g., a renewable hydrocarbon stream) can comprise six carbon containing aromatic compounds ("C6") (e.g., benzene) through twelve carbon containing aromatic compounds ("C12") (e.g., hexylbenzene or diisopropylbenzene). Thus, the hydrocarbon stream can comprise C7 to C12 aromatic compounds, C8 to C12 aromatic compounds, C9 to C12 aromatic compounds, C10 to C12 aromatic compounds, C6 to C10 aromatic compounds, C6 to C9 aromatic compounds, or C6 to C8 aromatic compounds, for example. In some embodiments, the C6 to C12 aromatic compounds only contain carbon and hydrogen. In other embodiments, the C6 to C12 aromatic compounds contain other elements in addition to carbon and hydrogen. In some embodiments, the hydrocarbon stream may comprise C6 to C12 mono-cyclic aromatic compounds such as benzene, toluene, ethylbenzene, xylenes, propylbenzenes, butylbenzenes, amylbenzenes, or hexylbenzenes and C10 to C12 di-cyclic aromatic compounds such as naphthalene, methyl naphthalene, dimethyl naphthalene, or ethyl naphthalene. In some embodiments, the hydrocarbon stream may also comprise C6-C12 paraffinic and/or olefinic non-aromatic hydrocarbons. The non-aromatic compounds may comprise linear non-aromatic compounds such as n-hexane or 3-heptene, branched non-aromatic compounds such as 3-ethyl-hextane or 2,5-dimethyl-2-octene, or cyclic non-aromatic compounds such as methylcyclohexane or 2,4-dimethylcyclohexene, for example. The hydrocarbon stream may also comprise compounds that contain heteroatom(s) such as nitrogen, oxygen, and sulfur.

In some embodiments, the hydrocarbon stream comprising C6 to C12 aromatic compounds can be a renewable hydrocarbon stream. In some embodiments, the renewable hydrocarbon stream can be derived from renewable sources such as biomass, carbon dioxide, carbon monoxide, animal fats, vegetable oils, waste products, or bio-alcohols made from sugarcane, sugar beet, corn, cellulosic materials, carbon dioxide, carbon monoxide, or waste gases, for example. In some embodiments, the renewable hydrocarbon stream comprising C6-C12 aromatic compounds can be produced from pyrolysis of biomass or waste products, from depolymerization, decomposition, or other thermal and/or catalytic conversion of waste plastics or solid waste, from dehydration, oligomerization, cracking, and aromatization of bio-alcohols, or from synthesis processes of syngas derived from biomass or other renewable sources.

In some embodiments, the (renewable) hydrocarbon stream may contain more light aromatic compounds than desired for a product fuel (e.g., jet fuel or diesel fuel). Some non-limiting examples of light aromatic compounds include benzene, toluene, xylene, and/or naphthalene. In some embodiments, the (renewable) hydrocarbon stream may contain more alkylating agents than desired for a fuel product. Alkylating agents are reagents for effecting alkylation. In some embodiments, the alkylating agents in the (renewable) hydrocarbon stream may comprise C2-C12 olefins (e.g., ethylene, propylene, butylenes, amylenes, hexenes, for example) and/or C1-C12 oxygenates such as alcohols and/or ethers.

### Alkylation

In some embodiments, to upgrade the hydrocarbon stream comprising C6-C12 aromatic compounds to desired fuels (e.g., jet or diesel fuel), the hydrocarbon stream is fed to an alkylation zone. In some embodiments, the alkylation zone can comprise at least one alkylation catalyst and be operated under alkylation conditions to alkylate at least a portion of the C6-C12 aromatic compounds in the hydrocarbon stream. In some embodiments, the alkylation is carried out using at least a portion of alkylating agents contained in the hydrocarbon stream (e.g., C2-C12 olefins and/or C1-C12 oxygenates such as alcohols and/or ethers) to produce an alkylated renewable hydrocarbon stream comprising C8-C24 aromatic hydrocarbons. In some embodiments, the alkylation can be carried out with additional alkylating agents contained in an alkylating agent stream to produce an alkylated hydrocarbon stream comprising C8-C24 aromatic hydrocarbons. In some embodiments, the alkylating agent stream comprises C2-C12 olefins and/or C1-C12 oxygenates such as alcohols and/or ethers. In some embodiments, the additional alkylating agent stream comprises renewable alkylating agents produced from renewable sources.

In some embodiments, the alkylation reaction can be carried out in at least one alkylation reactor. Thus, the alkylation zone can comprise at least one alkylation reactor, for example, with the at least one alkylation reactor comprising at least one alkylation catalyst. The at least one alkylation reactor can be operated adiabatically or isothermally, for example. Thus, in some embodiments, the alkylation reactor is operated adiabatically. In other embodiments, the alkylation reactor is operated isothermally.

In some embodiments, the alkylation reaction can be carried out in vapor phase, liquid phase, or mixed phase. In some embodiments, the alkylation reaction can be carried out in the vapor phase. In other embodiments, the alkylation reaction can be carried out in the liquid phase. In still other embodiments, the alkylation reaction can be carried out in a mixed phase.

Any known alkylation catalyst can be used in the alkylation step, including homogeneous and heterogeneous catalysts. In some embodiments, a heterogeneous catalyst (e.g., a solid acid catalyst, is used). Some examples of solid acid catalysts include both acidic clays, such as BASF F-24X and F-25X clays, and molecular sieves, both naturally occurring and synthetically produced. In some embodiments, a homogeneous catalyst such as sulfuric acid, hydrofluoric acid, phosphoric acid, aluminum (tri) chloride, or ionic liquids, or any combinations thereof is used.

In some embodiments, the alkylation catalyst employed in the alkylation step comprises at least one medium pore molecular sieve having a Constraint Index of 2-12 (as defined in U.S. Pat. No. 4,016,218). Suitable medium pore molecular sieves include ZSM-5, ZSM-11, ZSM-12, ZSM-22, ZSM-23, ZSM-35, and ZSM-48. ZSM-5 is described in detail in U.S. Pat. No. 3,702,886 and Re. 29,948. ZSM-11 is described in detail in U.S. Pat. No. 3,709,979. ZSM-12 is described in U.S. Pat. No. 3,832,449. ZSM-22 is described in U.S. Pat. No. 4,556,477. ZSM-23 is described in U.S. Pat. No. 4,076,842. ZSM-35 is described in U.S. Pat. No. 4,016,245. ZSM-48 is described in U.S. Pat. No. 4,234,231.

In other embodiments, the alkylation catalyst employed in the alkylation step comprises at least one molecular sieve of the MCM-22 family. As used herein, the term "molecular sieve of the MCM-22 family" (or "material of the MCM-22 family" or "MCM-22 family material" or "MCM-22 family zeolite") includes one or more of:
(1) molecular sieves made from a common degree crystalline building block unit cell, which unit cell has the MWW framework topology. (A unit cell is a spatial arrangement of atoms which if tiled in three-dimensional space describes the crystal structure. Such crystal structures are discussed in the "Atlas of Zeolite Framework Types", Fifth edition, 2001);
(2) molecular sieves made from a common second-degree building block, being a 2-dimensional tiling of such MWW framework topology unit cells, forming a monolayer of one unit cell thickness, for example one c-unit cell thickness;
(3) molecular sieves made from common second-degree building blocks, being layers of one or more than one unit cell thickness, wherein the layer of more than one unit cell thickness is made from stacking, packing, or binding at least two monolayers of one unit cell thickness. The stacking of such second-degree building blocks can be in a regular fashion, an irregular fashion, a random fashion, or any combination thereof; and
(4) molecular sieves made by any regular or random 2-dimensional or 3-dimensional combination of unit cells having the MWW framework topology.

Molecular sieves of the MCM-22 family include those molecular sieves having an X-ray diffraction pattern including d-spacing maxima at 12.4±0.25, 6.9±0.15, 3.57±0.07 and 3.42±0.07 Angstrom. The X-ray diffraction data used to characterize the material are obtained by standard techniques using the K-alpha doublet of copper as incident radiation and a diffractometer equipped with a scintillation counter and associated computer as the collection system.

Materials of the MCM-22 family include MCM-22 (described in U.S. Pat. No. 4,954,325), PSH-3 (described in U.S. Pat. No. 4,439,409), SSZ-25 (described in U.S. Pat. No. 4,826,667), ERB-1 (described in European Patent No. 0293032), ITQ-1 (described in U.S. Pat. No. 6,077,498), ITQ-2 (described in International Patent Publication No. WO97/17290), MCM-36 (described in U.S. Pat. No. 5,250,277), MCM-49 (described in U.S. Pat. No. 5,236,575), MCM-56 (described in U.S. Pat. No. 5,362,697), UZM-8 (described in U.S. Pat. No. 6,756,030), UZM-8HS (described in U.S. Pat. No. 7,713,513) and mixtures thereof.

In additional embodiments, the alkylation catalyst employed in the alkylation step comprises one or more large pore molecular sieves having a Constraint Index less than 2. Suitable large pore molecular sieves include zeolite beta, zeolite Y, Ultrastable Y (USY), Ultrahydrophobic Y (UHP-Y), Dealuminized Y (Deal Y), mordenite, ZSM-3, ZSM-4, ZSM-14, ZSM-18, ZSM-20 and mixtures thereof. Zeolite ZSM-3 is described in U.S. Pat. No. 3,415,736. Zeolite ZSM-4 is described in U.S. Pat. No. 4,021,947. Zeolite ZSM-14 is described in U.S. Pat. No. 3,923,636. Zeolite ZSM-18 is described in U.S. Pat. No. 3,950,496. Zeolite ZSM-20 is described in U.S. Pat. No. 3,972,983. Zeolite Beta is described in U.S. Pat. No. 3,308,069, and Re. No. 28,341. Low sodium Ultrastable Y molecular sieve (USY) is described in U.S. Pat. Nos. 3,293,192 and 3,449,070. Ultrahydrophobic Y (UHP-Y) is described in U.S. Pat. No. 4,401,556. Dealuminized Y zeolite (Deal Y) may be prepared by the method found in U.S. Pat. No. 3,442,795. Zeolite Y and mordenite are naturally occurring materials but are also available in synthetic forms, such as TEA-mordenite (i.e., synthetic mordenite prepared from a reaction mixture comprising a tetraethylammonium directing agent). TEA-mordenite is disclosed in U.S. Pat. Nos. 3,766,093 and 3,894,104.

In some embodiments, molecular sieves for the alkylation step comprise zeolite beta, zeolite Y, mordenite and molecular sieves of the MCM-22 family, and combinations thereof.

The above molecular sieves may be used as the alkylation catalyst in the alkylation step without any binder or matrix, i.e., in so-called self-bound form, for example. In other embodiments, the molecular sieve may be composited with another material which is resistant to the temperatures and other conditions employed in the alkylation reaction. Such materials can include active and inactive materials and synthetic or naturally occurring zeolites as well as inorganic materials such as clays and/or oxides such as alumina, silica, silica-alumina, zirconia, titania, magnesia or mixtures of these and other oxides, for example. The latter may be either naturally occurring or in the form of gelatinous precipitates or gels including mixtures of silica and metal oxides. In some embodiments, clays may also be included with the oxide type binders to modify the mechanical properties of the catalyst or to assist in its manufacture. Use of a material in conjunction with the molecular sieve, i.e., combined therewith or present during its synthesis, which itself is catalytically active may change the conversion and/or selectivity of the catalyst. In some embodiments, inactive materials can serve as diluents to control the amount of conversion so that products may be obtained economically and orderly without employing other means for controlling the rate of reaction. These materials may be incorporated into naturally occurring clays, e.g., bentonite and kaolin, to improve the crush strength of the catalyst under commercial operating conditions and function as binders or matrices for the catalyst, for example. The relative proportions of molecular sieve and inorganic oxide matrix vary widely, with the sieve content ranging from about 1 to about 90 percent by weight and more usually, particularly, when the composite is prepared in the form of beads, in the range of about 2 to about 80 weight percent of the composite.

In some embodiments, the alkylation step can be conducted in at least one fixed bed reactor(s), moving bed reactor(s), fluidized bed reactor(s) and/or reactive distillation unit(s). In addition, in some embodiments, the reactor(s) may comprise a single reaction zone or multiple reaction zones located in the same or different reaction vessels. Suitable conditions for the alkylation step comprise a temperature from 20 to 500° C, such as from 50 to 300° C, and a pressure from 10 to 15,000 kPa-a, such as from 100 to 7,000 kPa-a. In certain embodiments, the temperature and pressure conditions are selected to maintain the reactant substantially in the liquid phase. In other embodiments, the temperature and pressure conditions are selected to maintain the reactant in vapor phase. In still other embodiments, the temperature and pressure conditions are selected to maintain the reactant in mixed vapor/liquid phase. In the case of a continuous process, suitable weight hourly space velocities include from 0.01 to 100 hr⁻¹ for example.

The alkylation zone/step can produce an alkylated (renewable) hydrocarbon stream comprising C8-C24 aromatic hydrocarbons, for example.

### Hydrogenation

In some embodiments, following the alkylation reaction, at least part of the alkylated (renewable) hydrocarbon stream comprising C8-C24 aromatic hydrocarbons is fed to a hydrogenation zone/step. In some embodiments, a hydrogen stream comprising hydrogen is also fed to the hydrogenation zone (e.g., combined with the alkylated (renewable) hydrocarbon stream prior to hydrogenation). In some embodiments, the hydrogenation zone comprises at least one hydrogenation catalyst and can be operated under hydrogenation conditions to carry out a hydrogenation reaction. In some embodiments, the hydrogenation reaction reacts at least part of the C8-C24 aromatic compounds in the alkylated (renewable) hydrocarbon stream with hydrogen from a hydrogen stream to saturate at least a portion of the C8-C24 aromatic compounds and produce a hydrogenated (renewable) hydrocarbon stream. In some embodiments, the hydrogen stream is produced from processes using black or brown coal (lignite), steam methane reforming, autothermal reforming, partial oxidation, methane pyrolysis, ammonia splitting, electrolysis of water with nuclear, renewable or non-renewable electricity, from fermenting microbes found in depleted oil wells, by recovery of naturally occurring hydrogen found in underground deposits, or any combinations thereof.

The hydrogenation reaction can be carried out in one or more hydrogenation reactors. Thus, in some embodiments, the hydrogenation zone can comprise at least one hydrogenation reactor and the hydrogenation reactor can comprise at least one hydrogenation catalyst.

Hydrogenation of aromatics, hindered by the stable π-conjugated phenyl ring structures, can require high temperatures and pressures in some embodiments. However, some embodiments involve ambient hydrogenation.

Compared to the easy hydrogenation of alkene/alkyne groups, hydrogenating π-conjugation phenyl group (i.e., aromatics) is more difficult, due to their high aromaticity, nonpolarity, and large reaction energy barriers involved. In some embodiments, the hydrogenation of the alkylated (renewable) hydrocarbon stream can involve high reaction temperature (>100 °C) and hydrogen pressure (up to 1,000 bar), using a noble catalyst. Although certain aromatics (e.g., benzene) can be hydrogenated at mild conditions, solvents (e.g., isopropanol or ethanol) or promoters (e.g., Lewis acid) are required in some embodiments to facilitate the hydrogen transfer and ring open process for the aromatics.

Thus, to hydrogenate the alkylated (renewable) hydrocarbon stream containing aromatics, some embodiments use a group VIIIB metal (e.g., nickel, cobalt, platinum, ruthenium, rhodium, palladium, or iridium) catalyst with hydrogen gas at a pressure of up to several hundred atmospheres. In some embodiments, the group VIIIB metal(s) can be supported on inert material such as carbon, silicate, or alumina, for example, and used as heterogenous hydrogenation catalyst. In other embodiments, a more effective catalyst is used such as rhodium on carbon, for example. Under these conditions, aromatic rings are converted into cyclohexanes. For example, o-xylene yields 1,2-dimethylcyclohexane, and 4-tert-butylphenol gives 4-*tert*-butylcyclohexan. In some other embodiments, group VIIIB metal(s) such as ruthenium, platinum, rhodium, palladium, and iridium can be used to produce coordination complexes such as RuCl₂(PPh₃)₃, [C₈H₁₂IrP(C₆H₁₁)₃C₅H₅N]PF₆ (Crabtree's catalyst), Rh[(C₆H₅)₃P]₃Cl (Wilkinson's catalyst), and Rh₂Cl₂(C₈H₁₂)₂ and used as a homogenous hydrogenation catalyst. In another embodiment, nickel-based catalysts, such as Raney nickel and Urushibara nickel, can be used as heterogenous hydrogenation catalyst.

Ambient hydrogenation, as used in some embodiments, is not only facile and energy efficient (no need for energy input) but also essential for some hydrogen-related applications. For instance, solid hydrogen getters are required to control the hydrogen concentration and reduce the risk of explosion in hydrogen stations and cells. In some battery-driven equipment, hydrogen is inevitably released, which brings a severe explosion risk for defense and energy applications. Hence, solid organic hydrogen getters are indispensable to effectively hydrogenate at room temperature without any solvents or promoters due to equipment constraints and environmental limitations. As a typical example, the 1,4-bis(phenylethynyl)benzene (DEB) molecules, linked by the alkyne and phenyl ring groups, are commonly used as hydrogen getters. However, catalyzed by palladium catalyst, only the alkynyl groups are hydrogenated at ambient temperature.

Theoretically, the hydrogenation of solid aromatics requires highly efficient catalysts capable of simultaneously activating H₂ and C-C unsaturated bonds. However, most existing catalysts, limited to one or a few metals, offer inadequate active sites and are incapable of realizing full hydrogenation, especially for robust aromatics. Recently, high-entropy alloy (HEA) nanocatalysts have been widely used in catalysis due to their flexible composition, high activity, excellent stability, and a magic cock-tailing effect, which offer the promise of catalytic properties that could exceed conventional catalysts. HEA catalysts, containing multifunctional active sites, are used in some embodiments.

### Separation

Following the hydrogenation step/zone, in some embodiments, the hydrogenated stream can be separated in at least one separation zone/unit. In some embodiments, the at least one (first) separation unit can separate at least one gas and at least one liquid component from a product of the hydrogenation. In some embodiments, the at least one (first) separation unit can separate at least one gas and at least one liquid component from a product of the hydrogenation while maintaining a temperature of the product generally higher than a boiling point of the hydrogenated aromatic compound. In some embodiments, a second separation unit can separate a hydrogenated aromatic compound from the gas component separated by the first separation unit.

In some embodiments, the separation zone/unit is configured to separate the hydrogenated aromatics contained in the gas component separated from the liquid component (e.g., higher boiling point components) at a temperature higher than the boiling point of the hydrogenated aromatic compound so that the energy required to lower the concentration of the higher boiling point components that are present with the hydrogenated aromatic compound in the product of the hydrogenation reaction can be minimized.

In some embodiments, the separation zone further comprises a cooler for cooling the product from which the gas and liquid components are to be separated by the first separation unit.

In some embodiments, the separation zone allows the temperature of the product that is to be separated into the gas and liquid components to be maintained within a desired range in a stable manner in the (first) separation unit so that the recovering ratio of the gas component comprising hydrogenated aromatics separated in the (first) separation unit can be controlled and/or increased.

In some aspects, a temperature of the product (e.g., the hydrogenated (renewable) hydrocarbon stream) that is separated by the first separation unit is maintained in a range of 100° C to 280° C.

In some aspects, the separation zone further comprises a distillation unit for distilling the liquid component separated by the first separation unit, wherein an effluent of the distillation unit is mixed with the hydrogenated aromatic compound separated by the second separation unit.

In some embodiments, the distillation column distills the liquid component) separated by the first separation unit so that the necessary energy required for the distilling operation can be reduced as compared to a case where the whole amount of the product is distilled.

In some aspects, the distillation unit performs distillation by using the reaction heat of the hydrogenation reaction zone or reactor. This can allow the distillation unit to operate by making use of the reaction heat of the hydrogenation reaction unit, and the energy cost for the distillation unit can be minimized.

In some embodiments, at least part of the hydrogenated hydrocarbon stream is recovered as a renewable fuel.

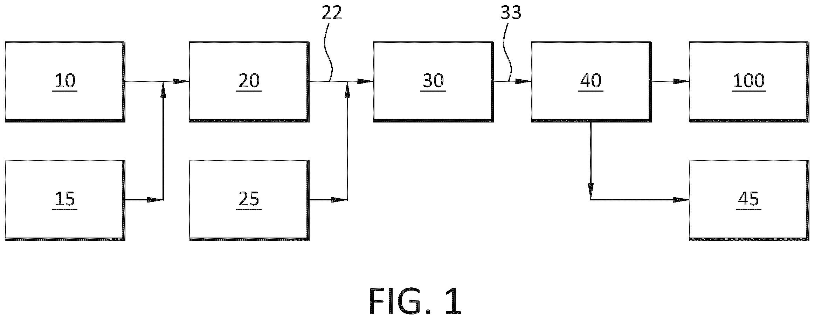

FIG. 1 shows a simplified flow diagram for certain embodiments that produce renewable fuels by upgrading a renewable hydrocarbon stream comprising C6-C12 aromatic compounds.

The feed renewable hydrocarbon stream 10 comprises C6-C12 aromatic compounds. The renewable hydrocarbon stream 10 can be derived from renewable sources such as biomass, carbon dioxide, carbon monoxide, animal fats, vegetable oils, waste products, or bio-alcohols made from sugarcane, sugar beet, corn, cellulosic materials, carbon dioxide, carbon monoxide, or waste gases, for example. In some embodiments, the renewable hydrocarbon stream comprising C6-C12 aromatic compounds 10 can be produced from pyrolysis of biomass or waste products, from depolymerization, decomposition, or other thermal and/or catalytic conversion of waste plastics or solid waste, from dehydration, oligomerization, cracking, and aromatization of bio-alcohols, or from synthesis processes of syngas derived from biomass or other renewable sources.

Optionally, an alkylating agents stream 15 comprising alkylating agents can be added to the renewable hydrocarbon stream 10 before or in the alkylation zone 20. In some embodiments, the alkylating agents stream 15 is added before the alkylation zone 20. In some embodiments, the alkylating agents stream 15 comprises C2-C12 olefins and/or C1-C12 oxygenates such as alcohols and/or ethers. In some embodiments, the alkylating agents stream 15 comprises light olefins such as ethylene, propylene, butenes, pentenes, or hexenes. In other embodiments, the alkylating agents stream 15 comprises C4-C12 olefins. In still other embodiments, the alkylating agents stream 15 comprises light alcohols such as methanol, ethanol, propanols, butanols, pentanols, or hexanols. In other embodiments, the alkylating agents stream 15 comprises C4-C12 alcohols. In additional embodiments, the alkylating agents stream 15 comprises C2-C12 ethers. In some embodiments, the alkylating agent stream 15 comprises at least some alkylating agents derived from renewable sources.

The alkylation zone 20 may contain at least one alkylation reactor. The at least one alkylation reactor can be isothermal or adiabatic, for example. The renewable hydrocarbon stream 10 and, optionally, the alkylating agents stream 15 are fed to the alkylation zone 20 into the at least one alkylation reactor. Alkylation of the renewable hydrocarbon stream 10 can be carried out in the at least one alkylation reactor at alkylation conditions. The alkylation can produce an alkylated renewable hydrocarbon stream 22.

Following the alkylation zone, the alkylated stream 22 can be combined with a hydrogen stream 25 comprising hydrogen. The hydrogen stream 25 can be added to the alkylated stream 22 before or in the hydrogenation zone 30. In some embodiments, the hydrogen stream 25 is added before the hydrogenation zone 30

The hydrogenation zone 30 may contain at least one hydrogenation reactor. The at least one hydrogenation reactor can be isothermal or adiabatic, for example. The at least one hydrogenation reactor can contain at least one hydrogenation catalyst. The alkylated renewable hydrocarbon stream 22 and, the hydrogen stream 25 are fed to the at least one hydrogenation reactor. Hydrogenation of the alkylated renewable hydrocarbon stream 22 can be carried out in the at least one hydrogenation reactor at hydrogenation conditions. The hydrogenation can produce a hydrogenated renewable hydrocarbon stream 33.

Following the hydrogenation zone, the hydrogenated stream 33 can be fed to a separation zone 40. The separation zone 40 may contain at least one separation unit (e.g., a distillation column). The separation zone 40 can separate the hydrogenated stream 33 into a renewable fuels stream 100 and a by-products stream 45.

The renewable fuels stream 100 comprises a fuel product (e.g., a diesel and/or jet fuel).

The by-products steam 45 may comprise water, light, and/or heavy material produced in the alkylation 20 and hydrogenation 30 zones, for example.

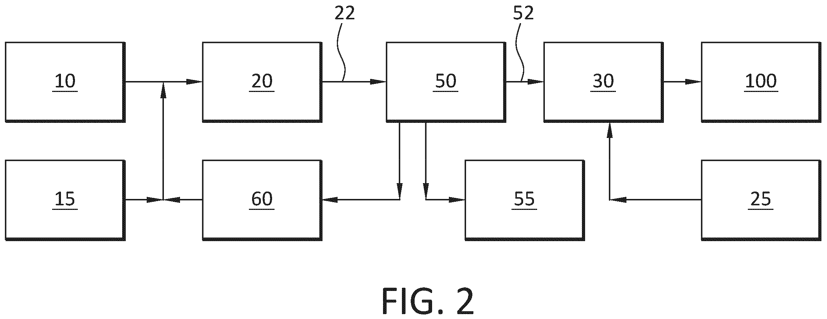

FIG. 2 shows a simplified flow diagram for certain embodiments that produce renewable fuels by upgrading a renewable hydrocarbon stream comprising C6-C12 aromatic compounds.

The feed renewable hydrocarbon stream 10 comprises C6-C12 aromatic compounds. The renewable hydrocarbon stream 10 can be derived from renewable sources such as biomass, carbon dioxide, carbon monoxide, animal fats, vegetable oils, waste products, or bio-alcohols made from sugarcane, sugar beet, corn, cellulosic materials, carbon dioxide, carbon monoxide, or waste gases, for example. In some embodiments, the renewable hydrocarbon stream comprising C6-C12 aromatic compounds 10 can be produced from pyrolysis of biomass or waste products, from depolymerization, decomposition, or other thermal and/or catalytic conversion of waste plastics or solid waste, from dehydration, oligomerization, cracking, and aromatization of bio-alcohols, or from synthesis processes of syngas derived from biomass or other renewable sources.

Optionally, an alkylating agents stream 15 can be added to the renewable hydrocarbon stream 10 before or in the alkylation zone 20. In some embodiments, the alkylating agents stream 15 is added before the alkylation zone 20. In some embodiments, the alkylating agents stream 15 comprises C2-C12 olefins and/or C1-C12 oxygenates such as alcohols and/or ethers. In some embodiments, the alkylating agents stream 15 comprises light olefins such as ethylene, propylene, butenes, pentenes, or hexenes. In other embodiments, the alkylating agents stream 15 comprises C4-C12 olefins. In still other embodiments, the alkylating agents stream 15 comprises light alcohols such as methanol, ethanol, propanols, butanols, pentanols, or hexanols. In other embodiments, the alkylating agents stream 15 comprises C4-C12 alcohols. In additional embodiments, the alkylating agents stream 15 comprises C2-C12 ethers. In some embodiments, the alkylating agents stream 15 comprises at least some alkylating agents derived from renewable sources.

The alkylation zone 20 may contain at least one alkylation reactor. The at least one alkylation reactor can be isothermal or adiabatic, for example. The renewable hydrocarbon stream 10 and, optionally, the alkylating agents stream 15 are fed to the alkylation zone 20 into the at least one alkylation reactor. Alkylation of the renewable hydrocarbon stream 10 can be carried out in the at least one alkylation reactor at alkylation conditions. The alkylation can produce an alkylated renewable hydrocarbon stream 22.

Following the alkylation zone 20, the alkylated stream 22 can be fed to a separation zone 50. The separation zone 50 may contain at least one separation unit (e.g., a distillation column). The separation zone 50 can separate the alkylated stream 33 into a purified alkylated stream 52, a by-products stream 55, and a recycle stream 60 comprising unconverted C6-C7 aromatic compounds. The by-products steam 55 may comprise water, light, and/or heavy material produced in the alkylation zone 20.

Following the separation zone 50, the purified alkylated stream 52 can be combined with a hydrogen stream 25 comprising hydrogen. The hydrogen stream 25 can be added to the purified alkylated stream 52 before or in the hydrogenation zone 30. In some embodiments, the hydrogen stream 25 is added before the hydrogenation zone 30.

The hydrogenation zone 30 may contain at least one hydrogenation reactor. The at least one hydrogenation reactor can be isothermal or adiabatic, for example. The at least one hydrogenation reactor can contain at least one hydrogenation catalyst. The purified alkylated hydrocarbon stream 52 and, the hydrogen stream 25 are fed to the at least one hydrogenation reactor. Hydrogenation of the purified alkylated hydrocarbon stream 52 can be carried out in the at least one hydrogenation reactor at hydrogenation conditions. The hydrogenation can produce a renewable hydrocarbon stream 100.

The renewable fuels stream 100 comprises a fuel product (e.g., a diesel and/or jet fuel).

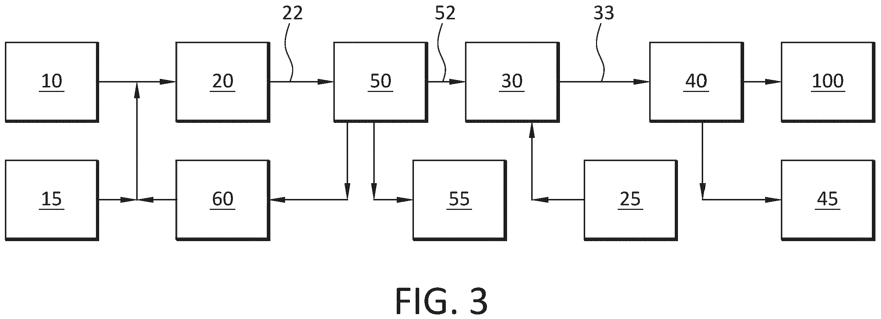

FIG. 3 shows a simplified flow diagram for certain embodiments that produce renewable fuels by upgrading a renewable hydrocarbon stream comprising C6-C12 aromatic compounds.

The feed renewable hydrocarbon stream 10 comprises C6-C12 aromatic compounds. The renewable hydrocarbon stream 10 can be derived from renewable sources such as biomass, carbon dioxide, carbon monoxide, animal fats, vegetable oils, waste products, or bio-alcohols made from sugarcane, sugar beet, corn, cellulosic materials, carbon dioxide, carbon monoxide, or waste gases, for example. In some embodiments, the renewable hydrocarbon stream comprising C6-C12 aromatic compounds 10 can be produced from pyrolysis of biomass or waste products, from depolymerization, decomposition, or other thermal and/or catalytic conversion of waste plastics or solid waste, from dehydration, oligomerization, cracking, and aromatization of bio-alcohols, or from synthesis processes of syngas derived from biomass or other renewable sources.

Optionally, an alkylating agents stream 15 can be added to the renewable hydrocarbon stream 10 before or in the alkylation zone 20. In some embodiments, the alkylating agents stream 15 is added before the alkylation zone 20. In some embodiments, the alkylating agents stream 15 comprises C2-C12 olefins and/or C1-C12 oxygenates such as alcohols and/or ethers. In some embodiments, the alkylating agents stream 15 comprises light olefins such as ethylene, propylene, butenes, pentenes, or hexenes. In other embodiments, the alkylating agents stream 15 comprises C4-C12 olefins. In still other embodiments, the alkylating agents stream 15 comprises light alcohols such as methanol, ethanol, propanols, butanols, pentanols, or hexanols. In other embodiments, the alkylating agents stream 15 comprises C4-C12 alcohols. In additional embodiments, the alkylating agents stream 15 comprises C2-C12 ethers. In some embodiments, the alkylating agents stream 15 comprises at least some alkylating agents derived from renewable sources.

The alkylation zone 20 may contain at least one alkylation reactor. The at least one alkylation reactor can be isothermal or adiabatic, for example. The renewable hydrocarbon stream 10 and, optionally, the alkylating agents stream 15 are fed to the alkylation zone 20 into the at least one alkylation reactor. Alkylation of the renewable hydrocarbon stream 10 can be carried out in the at least one alkylation reactor at alkylation conditions. The alkylation can produce an alkylated renewable hydrocarbon stream 22.

Following the alkylation zone 20, the alkylated stream 22 can be fed to a separation zone 50. The separation zone 50 may contain at least one separation unit (e.g., a distillation column). The separation zone 50 can separate the alkylated stream 33 into a purified alkylated stream 52, a first by-products stream 55, and a recycle steam 60 comprising unconverted C6-C7 aromatic compounds. The first by-products steam 55 may comprise water, light, and/or heavy material produced in the alkylation zone 20.

Following the separation zone 50, the purified alkylated stream 52 can be combined with a hydrogen stream 25 comprising hydrogen. The hydrogen stream 25 can be added to the purified alkylated stream 52 before or in the hydrogenation zone 30. In some embodiments, the hydrogen stream 25 is added before the hydrogenation zone 30.

The hydrogenation zone 30 may contain at least one hydrogenation reactor. The at least one hydrogenation reactor can be isothermal or adiabatic, for example. The at least one hydrogenation reactor can contain at least one hydrogenation catalyst. The purified alkylated hydrocarbon stream 52 and, the hydrogen stream 25 are fed to the at least one hydrogenation reactor. Hydrogenation of the purified alkylated hydrocarbon stream 52 can be carried out in the at least one hydrogenation reactor at hydrogenation conditions. The hydrogenation can produce a hydrogenated hydrocarbon stream 33.

Following the hydrogenation zone 30, the hydrogenated stream 33 can be fed to a separation zone 40. The separation zone 40 may contain at least one separation unit (e.g., a distillation column). The separation zone 40 can separate the hydrogenated stream 33 into a renewable fuels stream 100 and a second by-products stream 45.

The renewable fuels stream 100 comprises a fuel product (e.g., a diesel and/or jet fuel).

The second by-products steam 45 may comprise water, light, and/or heavy material produced in the alkylation 20 and hydrogenation 30 zones, for example.

In one embodiment, the alkylating agents stream comprises light olefins such as ethylene, propylene, butenes, pentenes, or hexenes. In another embodiment, the alkylating agents stream comprises C4-C12 olefins. In an alternate embodiment, the alkylating agents stream comprises light alcohols such as methanol, ethanol, propanols, butanols, pentanols, or hexanols. In another alternate embodiment, the alkylating agents stream comprises C4-C12 alcohols. In yet another alternate embodiment, the alkylating agents stream comprises C2-C12 ethers.

The foregoing description of certain examples including the illustrated examples above, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure. For instance, any examples described herein can be combined with any other examples to yield further examples.

## Claims

1. A method for producing renewable fuels, comprising:
(1) alkylating a renewable hydrocarbon stream comprising C6-C12 aromatic compounds in an alkylation zone with alkylating agents to produce an alkylated renewable hydrocarbon stream comprising C8-C24 aromatic hydrocarbons,
(2) hydrogenating at least part of the alkylated renewable hydrocarbon stream obtained in (1) in a hydrogenation zone with hydrogen to saturate at least a portion of the C8-C24 aromatic hydrocarbons in the alkylated renewable hydrocarbon stream and produce a hydrogenated renewable hydrocarbon stream, and
(3) recovering a renewable fuels stream from at least part of the hydrogenated renewable hydrocarbon stream obtained in (2);
optionally, wherein the hydrogenation step saturates at least 30 wt.% of the C8-C24 aromatic hydrocarbons in the alkylated renewable hydrocarbon stream.

2. The method of claim 1, wherein recovering a renewable fuels stream from at least part of the hydrogenated renewable hydrocarbon stream comprises separating the renewable fuels stream from by-products in at least one separation unit; optionally, wherein the at least one separation unit comprises a distillation column.

3. The method of any of the preceding claims, wherein the alkylation zone comprises at least one alkylation reactor comprising an alkylation catalyst: optionally, wherein the alkylation catalyst comprises zeolite beta, zeolite Y, mordenite and molecular sieves of the MCM-22 family, or any combinations thereof.

4. The method of any of the previous claims, wherein the hydrogenation zone comprises a hydrogenation reactor comprising a hydrogenation catalyst; optionally, wherein the hydrogenation catalyst comprises one or more Group VIIIB metals; or wherein the hydrogenation catalyst comprises nickel, cobalt, platinum, ruthenium, rhodium, palladium, iridium, or any combination thereof.

5. The method of any of the preceding claims, wherein at least a portion of the alkylating agents are added to the renewable hydrocarbon stream.

6. The method of any of the preceding claims, wherein the alkylating agents all come from the renewable hydrocarbon stream.

7. The method of any of the preceding claims, wherein at least part of the alkylating agents come from an additional alkylating agents stream.

8. The method of any of the preceding claims, wherein the alkylating agents comprise C2-C12 olefins or C1-C12 oxygenates.

9. The method of any of the preceding claims, wherein the alkylation is carried out in the liquid phase.

10. The method of any of the preceding claims, wherein the alkylation is carried out at least partially in the vapor phase.

11. The method of any of the preceding claims, wherein the renewable fuels stream is a sustainable aviation fuel; and/or wherein the renewable hydrocarbons stream comes from biomass, solid waste, waste plastic, waste gas, syn gas, or any combinations thereof.

12. A system for producing renewable fuels, comprising:
(1) at least one alkylation reactor for alkylating a renewable hydrocarbon stream comprising C6-C12 aromatic compounds with alkylating agents to produce an alkylated renewable hydrocarbon stream comprising C8-C24 aromatic hydrocarbons,
(2) at least one hydrogenation reactor for hydrogenating at least part of the alkylated renewable hydrocarbon stream obtained in (1) with hydrogen to saturate at least a portion of the C8-C24 aromatic hydrocarbons in the alkylated renewable hydrocarbon stream and produce a hydrogenated renewable hydrocarbon stream, and
(3) at least one separation unit for recovering a renewable fuels stream from the hydrogenated renewable hydrocarbon stream obtained in (2);
optionally, wherein the at least one separation unit comprises a distillation column and/or at least one hydrogenation reactor comprises a hydrogenation catalyst.

13. The system according to claim 12, wherein the at least one alkylation reactor is configured to operate adiabatically and/or wherein the at least one alkylation reactor is configured to operate isothermally.

14. The system according to claim 12 or 13, wherein the at least one alkylation reactor comprises a heterogenous alkylation catalyst; optionally, wherein the alkylation catalyst comprises zeolite beta, zeolite Y, mordenite and molecular sieves of the MCM-22 family, or any combinations thereof.

15. The system according to any of claims 12 to 14, wherein the separation unit separates a by-products stream from the hydrogenated renewable hydrocarbon stream.
